# EUROPÄISCHE PATENTSCHRIFT

(11) **EP 2 136 456 B1**
(45) Veröffentlichungstag und Bekanntmachung des Hinweises auf die Patenterteilung: **12.09.2012**
(21) Anmeldenummer: 08011128.9
(22) Anmeldetag: 19.06.2008
(51) Int. Cl.: H02K 11/00

(54) **Bausatz-Servomotor**
Component kit - servo motor
Servomoteur de kit

(43) Veröffentlichungstag der Anmeldung: 23.12.2009
(73) Patentinhaber: SICK STEGMANN GmbH, 78166 Donaueschingen (DE)
(72) Erfinder: Siraky, Josef, 78166 Donaueschingen (DE)
(74) Vertreter: Modrow, Stephanie

(56) Entgegenhaltungen:
- EP-A- 0 146 783
- DE-A1- 3 310 564
- DE-C1- 19 742 800

## Beschreibung

Die Erfindung betrifft einen Bausatz-Servomotor gemäß dem Oberbegriff des Patentanspruchs 1.

Servomotoren bestehen aus einem Elektromotor und einer nachfolgend als Drehgeber bezeichneten Drehwinkel-Messvorrichtung. Der Elektromotor weist einen Motorstator und einen Rotor auf, wobei der Drehgeber den Drehwinkel bzw. eine von dem Drehwinkel abhängige Größe des Rotors gegenüber dem Motorstator bzw. dem Motorgehäuse misst. Hierzu wird eine Geberwelle des Drehgebers mit dem Rotor des Elektromotors und eine Statoreinheit des Drehgebers mit dem Motorstator gekoppelt. Die Ankopplung muss dabei einerseits eine möglichst winkeltreue Verbindung herstellen, um eine exakte Winkelmessung zu ergeben, muss andererseits aber unvermeidliche radiale und axiale Fluchtungstoleranzen beim Anbau des Drehgebers an den Elektromotor aufnehmen können.

Für die Ankopplung des Drehgebers an den Elektromotor sind im Wesentlichen zwei Varianten bekannt. In einer Ausführung sind der Motorstator des Elektromotors und die Statoreinheit des Drehgebers fest miteinander verbunden und der Rotor des Elektromotors und die Geberwelle sind über eine radial und axial flexible, jedoch möglichst winkelsteife Kupplung miteinander verbunden, die insbesondere als Balgkupplung ausgebildet ist. In einer anderen Ausführung sind der Rotor des Elektromotors und die Geberwelle fest miteinander verbunden und der Motorstator und die Motorstatoreinheit des Drehgebers sind über eine Statorkupplung, die häufig als Drehmomentstütze bezeichnet wird, miteinander verbunden. Diese beiden Ausführungen sind z. B. in der DE 33 10 564 A1 in ihrem grundsätzlich Aufbau beschrieben.

Bei Bausatz-Elektromotoren ist der Rotor in dem Motorstator ohne Lagerung angeordnet. Der Bausatz-Motor wird als Einheit aus dem Motorstator und dem gelagerte Rotor für die jeweilige Anwendung zur Verfügung gestellt. Erst wenn der Bausatz-Motor abtriebseitig angebaut ist, nimmt der Rotor in montiertem Zustand seine Arbeitsposition in dem Motorstator ein. Bei Bausatz-Servomotoren hat dies zur Folge, dass der an den Motorstator und den Rotor angekoppelte Drehgeber bei der Montage des Elektromotors eine relativ große radiale und axiale Bewegung zwischen dessen Rotor und Motorstator ausgleichend überbrücken muss. Dieser notwendige große Ausgleich der radialen und axialen Bewegungen steht der Anforderung an eine möglichst hohe Winkeltreue im montierten Zustand entgegen.

Werden in bekannter Weise der Rotor des Elektromotors und die Geberwelle über eine Balgkupplung miteinander verbunden, so ergeben sich schwer beherrschbare Probleme, insbesondere weil bei einer Winkelbeschleunigung die Massenträgheit der mit der Geberwelle verbundenen rotierenden Teile des Drehgebers zu einem Drehmoment führt, welches Resonanzschwingungen des gesamten Systems verursachen kann. Dies ist insbesondere dann problematisch, wenn eine hohe Regelsteifigkeit des Servomotor-Systems gefordert ist.

Die bekannte Statorkupplung vermeidet dieses Problem, weil lediglich die minimale Lagerreibung der rotierenden Teile ein Drehmoment auf die Statorkupplung ausübt. Auf die Statorkupplung wirkt somit praktische kein von der Drehbeschleunigung abhängiges Drehmoment. Bei einer Anordnung mit Statorkupplung kann es jedoch schwierig werden, die Masse des Drehgebersystems gering zu halten, was insbesondere bei großen Durchmessern problematisch werden kann. Je größer die Masse des Drehgebersystems ist, desto steifer muss die Statorkupplung gewählt werden, was wiederum die auf die Lager der rotierenden Teile des Drehgebers wirkenden Kräfte erhöht und damit für die Lebensdauer nachteilig ist.

Der Erfindung liegt die Aufgabe zugrunde einen Bausatz-Servomotor zu schaffen, bei welchem die Ankopplung des Drehgebers an den Elektromotor kostengünstig ist und sich insbesondere für die speziellen Anforderungen dieser Bausatz-Servomotoren eignet.

Diese Aufgabe wird erfindungsgemäß durch einen Bausatz-Servomotor mit den Merkmalen des Patentanspruchs 1 gelöst.

Vorteilhafte Ausführung der Erfindung sind in den Unteransprüchen angegeben.

Bei dem erfindungsgemäßen Bausatz-Servomotor handelt es sich im Allgemeinen um einen Motor mit großem Durchmesser, wie er auch als Torquemotor bekannt ist. Solche Bausatz-Motoren mit großem Durchmesser sind im Allgemeinen nicht auf hohe Drehbeschleunigungen ausgelegt wie Standard-Servomotoren, die ihre Leistung aus der Drehzahl holen und daher immer mit einem Getriebe zusammenwirken. Die Erfindung nützt die relativ geringen Rotorbeschleunigungen eines solchen Motors für eine kostengünstige Anordnung der Ankopplung des Drehgebers aus. Die bei solchen Bausatz-Elektromotoren mit großem Durchmesser übliche Ausbildung des Rotors als Hohlwelle wird dazu genutzt, die Geberwelle mit einem geringeren Durchmesser koaxial im Innendurchmesser der Hohlwelle des Rotors anzuordnen und die Kupplung als axial flach ausgebildete Kupplung auszubilden, die den Ringspalt zwischen dem Außendurchmesser der Geberwelle und dem Innendurchmesser der Hohlwelle überbrückt. Die Kupplung von Geberwelle und Rotor vergrößert somit in vorteilhafter Weise die axiale Baulänge des Bausatz-Servomotors praktisch nicht. Die flache Kupplung hat im Wesentlichen die Form einer elastischen Kreisringscheibe, sodass sie große axiale und radiale Bewegungen elastisch aufnehmen kann und dabei jedoch eine hohe Drehsteifigkeit und damit Winkeltreue besitzt. Die Kupplung ist vorzugsweise mit einer elastischen Membran, insbesondere aus einem gummielastischen Werkstoff ausgebildet. Um die großen axialen und radialen Bewegungen, die insbesondere zwischen dem nichtmontierten und montierten Zustand des Bausatz-Motors auftreten, aufnehmen zu können, ist die Membran vorzugsweise konzentrisch gewellt.

Alternativ ist es auch möglich, die Kupplung aus einem federelastischen Metallblech herzustellen, wobei die Kupplung vorzugsweise Federelemente aus diesem Metallblech aufweist, die z. B. in Form von radialen Federstegen ausgebildet sein können. Diese Federelemente insbesondere Federstege sind aus dem Metallblech in der Weise ausgestanzt, dass die Blechebene der Federelemente im Wesentlichen zur Achse des Rotors bzw. der Geberwelle senkrecht verläuft. Dadurch ist eine elastische Biegsamkeit der aus den Federelementen gebildeten Kupplung in radialer und insbesondere axialer Richtung möglich, während die Kupplung eine hohe Drehsteifigkeit in der Ebene der Federelemente aufweist.

Für eine einfache und exakte Montage der Kupplung ist es von Vorteil, wenn die Kupplung mit einem Umfangselement an der Hohlwelle und mit einem Nabenelement an der Geberwelle befestigt wird. Es ist somit möglich, die Kupplung an der Endstirnfläche der Hohlwelle einerseits und an dem motorseitigen Ende der Geberwelle andererseits in einfacher Weise zu befestigen, z. B. anzuschrauben, anzunieten der anzuschweißen.

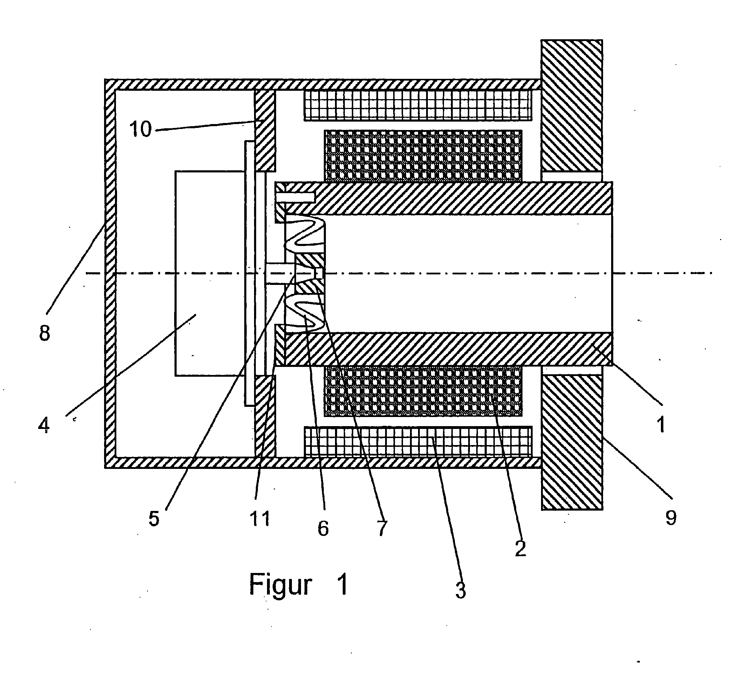

Im folgenden wird die Erfindung anhand eines in der Zeichnung dargestellten Ausführungsbeispiels näher erläutert. Dabei zeigt die einzige Figur 1 einen Axialschnitt durch einen Bausatz-Servomotor.

Der in der Zeichnung dargestellte Bausatz-Servomotor besteht aus einem Bausatz-Elektromotor und einem an diesen angebauten Drehgeber (Drehwinkel-Messvorrichtung). Der Bausatz-Elektromotor weist einen Rotor 1 auf, der Permanentmagnete 2 trägt. Weiter weist der Bausatz-Elektromotor einen Motorstator mit Wicklungen 3 auf, die in einem Motorgehäuse 8 angeordnet sind.

Wie dies für einen Bausatz-Motor charakteristisch ist, ist der Rotor 1 mit den Permanentmagneten im nicht montierten Auslieferungszustand nicht in dem Motorgehäuse 8 gelagert. Der Rotor 1 liegt vielmehr zunächst ungelagert im Motorgehäuse 8 und wird dabei mit den Permanentmagneten 2 an den Polschuhen der Wicklungen 3 anliegen. Der Rotor 1 liegt somit exzentrisch im Motorgehäuse 8.

Bei der Montage des Bausatz-Elektromotors wird das Motorgehäuse 8 mit einem Anbauflansch 9 an der jeweiligen Anwendungseinrichtung montiert und der Rotor 1 wird mit dem anzutreibenden Teil der Anwendungseinrichtung verbunden, z. B. als Hohlwelle auf eine anzutreibende Welle aufgeschoben. Dadurch wird der Rotor 1 in seine zentrierte koaxiale Position in dem Motorgehäuse 8 gebracht.

Der Drehgeber weist eine Statoreinheit 4 auf, in welcher koaxial drehbar eine Geberwelle 5 gelagert ist. Die Geberwelle 5 trägt in an sich bekannter Weise eine mit der Geberwelle 5 rotierende Maßverkörperung, die durch eine in der Statoreinheit angeordnete Abtastung abgetastet wird. Da der Drehgeber insoweit in an sich bekannter Weise aufgebaut ist, ist der Drehgeber in der Zeichnung nur schematisch dargestellt. Die Statoreinheit 4 wird mit dem Gebergehäuse fest an einem Innenflansch 10 angebracht, z. B. angeschraubt, wobei der Innenflansch 10 auf der von dem Anbauflansch 9 abgewandten Stirnseite des Elektromotors in dem Motorgehäuse 8 angebracht ist. Auf diese Weise ist die Statoreinheit 4 des Drehgebers starr mit dem Motorgehäuse 8 und damit mit dem durch die Wicklungen 3 gebildeten Motorstator verbunden.

Die Geberwelle 5 greift mit ihrem Ende koaxial in die Hohlwelle des Rotors 1, wobei der Außendurchmesser des Endes der Geberwelle 5 kleiner ist als der Innendurchmesser der Halbwelle. Die Geberwelle 5 ist an den Rotor 1 radial und axial elastisch, aber drehwinkeltreu gekoppelt. Hierzu dient eine axial flache Kupplung, die im Wesentlichen die Form einer Kreisringscheibe aufweist. Die Kupplung besteht aus einer kreisringscheibenförmigen Membran 6 aus einem gummielastischen Werkstoff. Die Membran 6 ist zentrisch mit einem runden Nabenelement 7 versehen und an ihrem Außenumfang mit einem kreisringscheibenförmigen Umfangselement 11. Das Nabenelement 7 weist eine zentrische axiale konische Aufnahme auf, in welche passend ein konisches Ende der Geberwelle 5 eingreift. Das Nabenelement 7 ist mit der eingesetzten Geberwelle 5 fest verbunden, z. B. verschraubt. Das Umfangselement 11 sitzt auf der dem Drehgeber zugewandten Endstirnfläche der Hohlwelle des Rotors 1 auf und ist mit dieser fest verbunden, z. B. verschraubt.

Die Membran 6 ist konzentrisch gewellt, d. h. sie weist in einem radialen Schnitt die Form einer Wellenlinie auf, wobei die Wellentäler und Wellenberge konzentrisch die Mittelachse des Rotors 1 und der Geberwelle 5 umschließen. Aufgrund der Elastizität der Membran 6 und deren gewellter Form kann sich die Geberwelle 5 mit dem Nabenelement 7 gegenüber der Hohlwelle des Rotors 1 axial und radial bewegen, sodass ein radialer und/ oder axialer Versatz zwischen der Geberwelle 5 und dem Rotor 1 und ebenso auch Fluchtungswinkel zwischen der Geberwelle 5 und dem Rotor 1 ausgeglichen werden. Die Membran 6 weist jedoch in Rotationsrichtung eine ausreichend hohe Steifigkeit auf, um Drehbewegungen des Rotors 1 winkeltreu auf die Geberwelle 5 zu übertragen.

Die Membran 6 und das Nabenelement 7 sind in axialer Richtung gegenüber dem Umfangselement 11 so versetzt, dass sich die Membran 6 und das Nabenelement 7 innerhalb der Hohlwelle des Rotors 1 befinden. Die Geberwelle 5 ragt koaxial in die Hohlwelle des Rotors 1. Der radiale Ringspalt zwischen dem Außenumfang der Geberwelle 5 und dem Innenumfang der Hohlwelle des Rotors 1 wird durch die Kupplung und insbesondere die Membran 6 überbrückt. Auf diese Weise ist die Kupplung praktisch vollständig in den Innenraum der Hohlwelle des Rotors 1 verlagert und vergrößert die axiale Baulänge des gesamten Bausatz-Servomotors praktisch nicht. Der gummielastische Werkstoff der Membran 6 weist zudem Dämpfungseigenschaften auf, sodass auch eventuelle minimale Verformungen in Drehrichtung nicht zu Resonanzerscheinungen im Regelkreis führen.

### Bezugszeichenliste

- 1: Rotor
- 2: Permanentmagnete
- 3: Wicklungen
- 4: Statoreinheit
- 5: Geberwelle
- 6: Membran
- 7: Nabenelement
- 8: Motorgehäuse
- 9: Anbauflansch
- 10: Innenflansch
- 11: Umfangselement

## Patentansprüche

1. Bausatz-Servomotor, bestehend aus einem Elektromotor und einem Drehgeber, wobei der Elektromotor einen Motorstator (3, 8) und einen ungelagert in dem Motorstator (3, 8) angeordneten Rotor (1) aufweist, wobei der Motorstator (3, 8) und der Rotor (1) abtriebseitig anbaubar sind, wobei der Rotor (1) zumindest an seinem von der Anbauseite (9) abgewandten Ende als Hohlwelle ausgebildet ist, wobei der Drehgeber an der von der Anbauseite (9) abgewandten Seite an den Elektromotor angebaut ist und eine Statoreinheit (4) und eine Geberwelle (5) aufweist, wobei die Statoreinheit (4) fest mit dem Motorstator (3, 8) verbunden ist und wobei die Geberwelle (5) über eine radial und axial elastische, aber drehwinkeltreue Kupplung mit dem Rotor (1) verbunden ist,
**dadurch gekennzeichnet, dass** die Geberwelle (5) an ihrem koaxial zur Hohlwelle des Rotors (1) ausgerichteten motorseitigen Ende einen Außendurchmesser aufweist, der kleiner ist als der Innendurchmesser der Hohlwelle, und dass die Kupplung axial flach ausgebildet ist und den Ringspalt zwischen dem Außendurchmesser der Geberwelle (5) und dem Innendurchmesser der Hohlwelle überbrückt.

2. Bausatz-Servomotor nach Anspruch 1,
**dadurch gekennzeichnet, dass** die Kupplung ein Umfangselement (11) zur Befestigung an der Hohlwelle des Rotors (1) und ein Nabenelement (7) zur Befestigung an der Geberwelle (5) aufweist.

3. Bausatz-Servomotor nach Anspruch 2,
**dadurch gekennzeichnet, dass** das Umfangselement (11) eine Kreisringscheibe ist, die an der Endstirnfläche der Hohlwelle befestigbar ist.

4. Bausatz-Servomotor nach Anspruch 2 oder 3,
**dadurch gekennzeichnet, dass** das Nabenelement (7) an dem motorseitigen Ende der Geberwelle (5) befestigbar ist.

5. Bausatz-Servomotor nach Anspruch 4,
**dadurch gekennzeichnet, dass** das Nabenelement (7) und das Ende der Geberwelle (5) mit achsmittigen Konusflächen ineinander greifen.

6. Bausatz-Servomotor nach einem Ansprüche 1 bis 5,
**dadurch gekennzeichnet, dass** die Kupplung eine elastische Membran (6) aufweist.

7. Bausatz-Servomotor nach Anspruch 6,
**dadurch gekennzeichnet, dass** die Membran (6) aus einem gummielastischen Werkstoff besteht.

8. Bausatz-Servomotor nach Anspruch 6 oder 7,
**dadurch gekennzeichnet, dass** die Membran (6) konzentrisch gewellt ist.

9. Bausatz-Servomotor nach einem der Ansprüche 1 bis 5,
**dadurch gekennzeichnet, dass** die Kupplung Federelemente aus einem federelastischen Metallblech aufweist.

10. Bausatz-Servomotor nach Anspruch 9,
**dadurch gekennzeichnet, dass** die Federelemente radiale Federstege aufweisen.

## Claims

1. A kit servomotor, consisting of an electromotor and a rotary encoder, wherein the electromotor displays a motor stator (3, 8) and a rotor (1), disposed in unsupported fashion in the motor stator (3, 8); wherein the motor stator (3, 8) and the rotor (1) can be attached on the output end; wherein the rotor (1) is designed as a hollow shaft, at least on its end opposite the attachment end (9); wherein the rotary encoder is attached to the electromotor at the end opposite the attachment end (9) and displays a stator unit (4) and an encoder shaft (5); wherein the stator unit (4) is firmly connected to the motor stator (3, 8); and wherein the encoder shaft (5) is connected to the rotor (1) using a coupling that is isogonal with respect to the angle of rotation, but elastic in the radial and axial directions,
**characterised in that** the encoder shaft (5), at its motor end, which is coaxial to the hollow shaft of the rotor (1), has an outer diameter that is smaller than the inner diameter of the hollow shaft, and the coupling is axially flat in design and bridges the annular gap between the outer diameter of the encoder shaft (5) and the inner diameter of the hollow shaft.

2. Kit servomotor according to Claim 1,
**characterised in that** the coupling has a circumferential element (11) to secure it to the hollow shaft of the rotor (1) and a hub element (7) to secure it to the encoder shaft (5).

3. Kit servomotor according to Claim 2,
**characterised in that** the circumferential element (11) is a circular disc, which can be secured to the end face of the hollow shaft.

4. Kit servomotor according to Claim 2 or 3,
**characterised in that** the hub element (7) can be secured to the motor end of the encoder shaft (5).

5. Kit servomotor according to Claim 4,
**characterised in that** the hub element (7) and the end of the encoder shaft (5) interlock using axially centric conical surfaces.

6. Kit servomotor according to one of Claims 1 to 5,
**characterised in that** the coupling displays an elastic diaphragm (6).

7. Kit servomotor according to Claim 6,
**characterised in that** the diaphragm (6) consists of a rubber-elastic material.

8. Kit servomotor according to Claim 6 or 7,
**characterised in that** the diaphragm (6) is corrugated in concentric fashion.

9. Kit servomotor according to one of Claims 1 to 5,
**characterised in that** the coupling displays spring elements made of springy elastic metal sheet.

10. Kit servomotor according to Claim 9,
**characterised in that** the spring elements display radial spring strips.

## Revendications

1. Module de servomoteur composé d'un moteur électrique et d'un encodeur,
- le moteur électrique ayant un stator (3, 8) et un rotor (1) monté sans palier dans le stator (3, 8),
- le stator (3, 8) et le rotor (1) étant destinés à être montés par leur côté de sortie d'entraînement,
- le rotor (1) étant réalisé comme arbre creux au moins à son extrémité non tournée vers le côté de montage (9),
- l'encodeur étant monté sur le côté du moteur électrique à l'opposé du côté de montage (9) et il comporte une unité de stator (4) et un arbre d'encodeur (5),
- l'unité de stator (4) étant reliée solidairement au stator (3, 8) du moteur, et
- l'arbre d'encodeur (5) étant relié au rotor (1) par un couplage radialement et axialement élastique mais solidaire en angle de rotation, module **caractérisé en ce que**
- l'extrémité côté moteur de l'arbre d'encodeur (5), coaxialement à l'arbre creux du rotor (1) ayant un diamètre inférieur au diamètre intérieur de l'arbre creux, et
- le couplage axial est plat et occupe l'intervalle annulaire entre le diamètre extérieur de l'arbre d'encodeur (5) et le diamètre intérieur de l'arbre creux.

2. Module de servomoteur selon la revendication 1,
**caractérisé en ce que**
le couplage comporte un élément périphérique (11) pour être fixé à l'arbre creux du rotor (1) et un élément de moyeu (7) pour être fixé à l'arbre d'encodeur (5).

3. Module de servomoteur selon la revendication 2,
**caractérisé en ce que**
l'élément périphérique (11) est un anneau de cercle qui se fixe contre la surface frontale de l'extrémité de l'arbre creux.

4. Module de servomoteur selon la revendication 2 ou 3,
**caractérisé en ce que**
l'élément de moyeu (7) se fixe à l'extrémité de l'arbre d'encodeur (5) côté moteur.

5. Module de servomoteur selon la revendication 4,
**caractérisé en ce que**
l'élément de moyeu (7) et l'extrémité de l'arbre d'encodeur (5) s'interpénètrent par des surfaces coniques centrées sur l'axe.

6. Module de servomoteur selon l'une des revendications 1 à 5,
**caractérisé en ce que**
le couplage comporte une membrane élastique (6).

7. Module de servomoteur selon la revendication 6,
**caractérisé en ce que**
la membrane (6) est en un matériau élastique comme du caoutchouc.

8. Module de servomoteur selon la revendication 6 ou 7,
**caractérisé en ce que**
la membrane (6) est ondulée de façon concentrique.

9. Module de servomoteur selon l'une des revendications 1 à 5,
**caractérisé en ce que**
le couplage comporte des éléments de ressort en une tôle de métal à l'élasticité du ressort.

10. Module de servomoteur selon la revendication 9,
**caractérisé en ce que**
les éléments de ressort ont des branches de ressort radiales.
